# EUROPÄISCHE PATENTSCHRIFT

(11) **EP 0 862 956 B1**
(45) Veröffentlichungstag und Bekanntmachung des Hinweises auf die Patenterteilung: **08.12.1999**
(21) Anmeldenummer: 98102783.2
(22) Anmeldetag: 18.02.1998
(51) Int. Cl.: B21D 26/02

(54) **Karosseriehohlträger, sowie Verfahren zur dessen Herstellung mittels Innenhochdruck**
Hollow beam for a car body and method of producing the same by internal high pressure forming
Poutre creuse pour une carrosserie, et méthode de formage par pression interne

(30) Priorität: 05.03.1997 DE 19708905
(43) Veröffentlichungstag der Anmeldung: 09.09.1998
(73) Patentinhaber: DaimlerChrysler AG, 70567 Stuttgart (DE)
(72) Erfinder: Lohse, Thomas, 21358 Mechtersen (DE); Schäfer, Frank, 22880 Wedel (DE); Schröder, Mattias, 21720 Grünendeich (DE)

(56) Entgegenhaltungen:
- EP-A- 0 195 157
- EP-A- 0 620 056

## Beschreibung

Die Erfindung geht aus von einem Verfahren zur Herstellung eines profilierten Karosseriehohlträgers nach dem Oberbegriff von Anspruch 1, wie es beispielsweise aus der EP-A-195 157 als bekannt hervorgeht.

Diese Druckschrift zeigt ein Verfahren zum Herstellen von gebogenen und unregelmäßig profilierten Hohlträgern zur Verwendung als Rahmenteile in Karosserien. Zum Herstellen der Hohlträger geht man von einen geraden Rundrohr oder Ovalrohr aus Stahl aus, welches in seiner Längserstreckung zunächst in eine der Raumform des fertigen Trägers grob angenäherte Vorform gebogen wird. Anschließend wird der Querschnitt dieses Rohlings, beispielsweise durch Beulen, in eine einer Ziffer 8 angenäherte Querschnittsform gebracht. Dieser Vorformling wird schließlich in ein geteiltes Formgebungswerkzeug eingelegt und durch Innenhochdruck in die gewünschte Endform umgeformt. Es ist davon die Rede, daß ohne eine vorherige Querschnittsanpassung die Umfangsdehnung an den am stärksten gedehnten Stellen bis zu 20 % betragen kann. Durch die der Innenhochdruckumformung vorausgehende Querschnittsanpassung kann jedoch die Umfangsdehnung auf etwa 5 % beschränkt werden, so daß aufgrund der geringeren Umformgrade ein vorheriges Weichglühen des Rohlings vermieden werden könne. Jedoch führen mechanische Vorverfomungen zu Kaltverfestigungen, die durch weitere Umformvorgänge verstärkt werden, wodurch die Duktilität des Materials und somit dessen Verformbarkeit verschlechtert wird. Als Werkstoff wird ein SAE-1010-Stahl erwähnt, bei dem es sich um einen unlegierten Stahl mit etwa 0,1 % Kohlenstoffgehalt handelt und einem einfachen Baustahl entspricht.

Zwar kann durch ein Zwischenglühen die Duktilität eines durch Umformen kaltverfestigten Stahles verbessert und ein so zwischenbehandelter Werkstoff nachfolgend weiter umgeformt werden. Jedoch geht durch ein Zwischenglühen ein gewünschtes Ausgangsgefüge verloren, welches für die Werkstoff-Festigkeit verantwortlich ist. Eine Kaltverfestigung tritt bei einer weiteren Umformung des Werkstückes nur noch an Stellen einer starken Umformung ein, jedoch werden in der Regel keineswegs alle Werkstückpartien gleichermaßen stark umgeformt. An Stellen einer geringen Umformung oder umformfrei bleibenden Stellen des Werkstückes bleibt der Werkstoff weich; das Bauteil hat an diesen Stellen nur eine geringe Festigkeit. Deshalb kann ein Zwischenglühen in der Regel aus Festigkeitsgründen nicht zugelassen werden, weil es den Werkstoff unzulässig schwächt.

In einem Beitrag von E.-J. Drewes "Ein neues Konzept zur Reduzierung des Karosseriegewichtes", erschienen in einer Sonderausgabe zu den Zeitschriften ATZ und MTZ zum Thema Werkstoffe im Automobilbau, veröffentlicht im Sommer 1996, wird u.a. erwähnt, daß ein Dachseitenlängsträger einer Fahrzeugkarosserie aus Stahl, der oberseitig die A-Säule und die B-Säule verbindet, selber den tragenden Querschnitt der C-Säule bildet und sich darüber hinaus bis zur hinteren Federbeinaufnahme erstreckt, vorteilhafterweise als gebogener, profilierter und einteiliger Hohlträger ausgebildet sein kann, der im Innenhochdruck-Umformverfahren herstellbar ist.

Aufgabe der Erfindung ist es, das gattungsgemäß zugrundegelegte Herstellungsverfahren dahingehend zu verbessern, daß die Teile kostengünstiger und bei hohen Umformgraden ohne Festigkeitseinbußen gewichtseinsparend hergestellt werden können.

Diese Aufgabe wird erfindungsgemäß durch die Merkmale des Patentanspruches 1 gelöst. Das vorgeschlagene Warmbandstahlblech als Ausgangswerkstoff ist preisgünstiger als andere kaltgewalzte Alternativwerkstoffe des Stahlbereiches (z.B. St37 oder FeP04), wodurch die Karosseriehohlträger kostengünstiger herstellbar sind. Außerdem weist zumindest bezogen auf den IHU-Prozeß das Warmbandstahlblech eine höhere Duktilität als Kaltwalzblech auf und das Gefüge des Warmbandstahlbleches geht auch nicht durch ein Zwischenglühen verloren. Es kann also erforderlichenfalls für diesen Werkstoff ohne Festigkeitseinbuße ein Zwischenglühen zugelassen werden. Aufgrund der besseren Verformbarkeit des Warmbandstahls kann die Blechdicke geringer als üblich gewählt werden, wodurch das zu fertigende Bauteil wesentlich leichter wird.

Zweckmäßige Ausgestaltungen der Erfindung können den Unteransprüchen entnommen werden; im übrigen ist die Erfindung anhand der Zeichnungen nachfolgend noch erläutert; dabei zeigen:
- Fig. 1: in einer perspektivischen Darstellung einen Karosserieabschnitt eines Kraftfahrzeuges mit einem als A-Säule ausgebildeten Karosseriehohlträger,
- Fig. 2: in einem Querschnitt ein geöffnetes Innenhochdruck-Um-formwerkzeug mit einem zu einem Karosseriehohlträger umzuformenden Rohling.

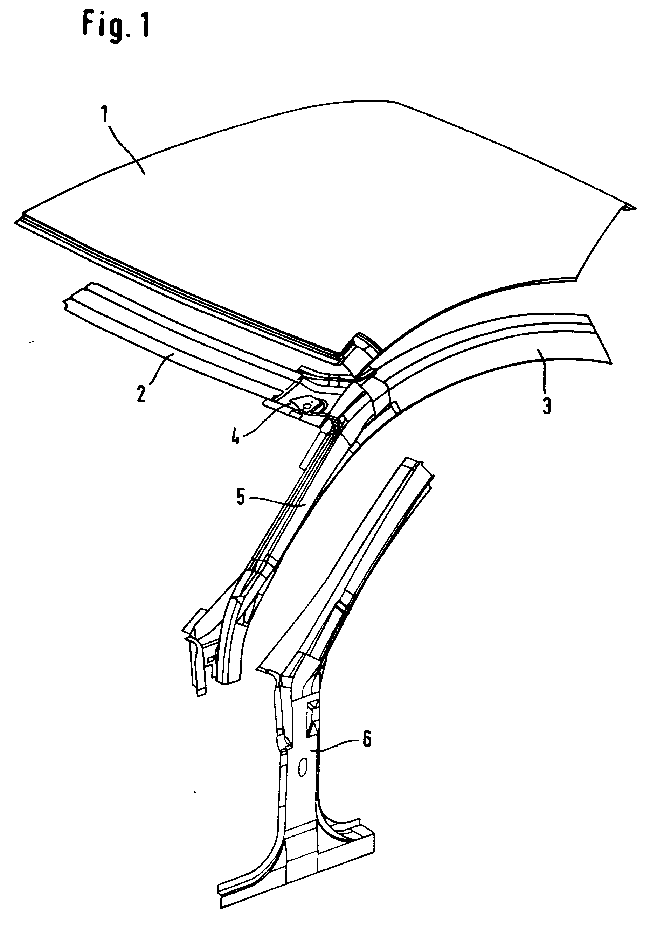

In Fig. 1 ist eine Dachbeplankung 1 eines Kraftfahrzeuges mit einem vorderen Dachrahmen 2 dargestellt, der sich an einen seitlichen Dachrahmen 3 über ein Verbindungseckstück 4 anschließt. In der Verlängerung des seitlichen Dachrahmens 3 zum Fahrzeugbug hin ist am Dachrahmen 3 eine Fahrzeug-A-Säule 5 angebracht. Diese wird nach Zusammenbau der Rohkarosserie von der Seitenwandbeplankung 6 (hier nur ausschnittsweise gezeigt) nach außen abgedeckt, die am seitlichen Dachrahmen 3 einerseits und an der A-Säule 5 andererseits befestigt ist.

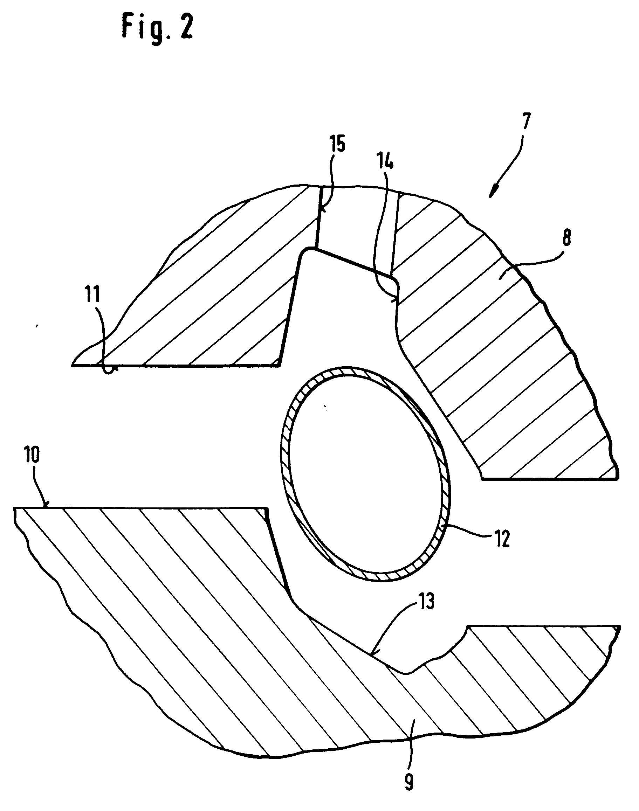

Zur Herstellung der A-Säule 5 wird gemäß Fig. 2 ein Hohlprofilrohling 12 mit ovalem Querschnitt in ein Innenhochdruck-Umformwerkzeug 7, das in ein Oberwerkzeug 8 und ein Unterwerkzeug 9 geteilt ist, eingelegt. Die einander zugewandten Stirnseiten 10,11 des Oberwerkzeuges 8 und des Unterwerkzeuges 9, sind im Umformbereich entsprechend der Endform des umzuformenden Rohlinges 12, also der A-Säulen-Form konturiert und bilden damit die sogenannte Gravur 13 des Werkzeuges 7. Die Trennfuge der beiden Werkzeughälften 8,9 verläuft diskontinuierlich in verschiedenen Horizontalebenen, wobei hier der hier rechts neben der Gravur 13 verlaufende Trennfugenabschnitt tiefer liegt als der links neben der Gravur 13 verlaufende Trennfugenabschnitt. Diese Ausbildung der Trennfuge dient zur Vermeidung eines Verklemmens des fertigumgeformten Rohlings 12 im Umformwerkzeug 7, das sich aufgrund des sich ausbildenden Hinterschnittes ergibt.

Sicher ist es denkbar, für die Herstellung des Karosseriehohlträgers einen Rohling mit kreisförmigem Querschnitt vorzusehen, jedoch ist dieser im Gegensatz zu einem Rohling 12 mit ovalem Querschnitt weniger an die Endform angepaßt, so daß sich bei der Herstellung höhere Umformgrade - definiert als Verhältnis von Enddurchmesser zu Anfangsdurchmesser des umzuformenden Bauteils - ergeben, bei denen das Material im Innenhochdruck-Umformverfahren an die Grenzen seiner Duktilität stößt. Demgemäß ist die ovale Ausbildung des Rohlingsquerschnittes von vorteilhafter Wirkung.

Als Material wird für den Rohling 12 ein Warmbandstahl (StW24) verwandt, welcher sich aufgrund seines noch nicht abgestreckten globularen Kornes im IHU-Verfahren besser verformen läßt als Kaltbandstahl (St14). Die Blechdicke kann dadurch geringer als üblich gewählt werden und beträgt etwa 1,5 bis 2 mm. Damit wird in erheblichem Maße am einzelnen Werkstück und damit an der gesamten Karosserie an Gewicht eingespart. Als Rohling 12 wird ein abgemessenes Stück eines längsnahtgeschweißten Stahlrohres verwendet.

Nach Schließen des Umformwerkzeuges 7 und beidseitigem Abdichten sowohl der Gravur 13 als auch des Rohlinges 12 durch einen hier nicht dargestellten Axialstempel wird ein Druckfluid in den Rohling 12 eingeleitet und dieser mittels eines auf das Fluid ausgeübten Hochdruckes aufgeweitet, wobei der Rohling 12 sich entsprechend der Konturierung der Gravur 13 an diese anlegt und damit deren Konturierung annimmt.

Die Umformung kann unter reinem Aufweiten oder auch unter Nachschieben von Material durch eine axiale Einwärtsbewegung der Axialstempel in die Gravur 13 hinein erfolgen. Hierbei kann aus dem Rohling 12 ein Dom bzw. ein Nebenformelement ausgeformt werden, wozu das Oberwerkzeug 8 in diesem Falle die dem Dom entsprechende Aussparung 14 besitzt. Oberseitig der Aussparung 14 ist im Oberwerkzeug 8 eine in die Aussparung 14 mündende Führungsbohrung 15 eingearbeitet, in der ein Gegenhalter zur kontrollierten Ausbildung des Domes führbar ist. Die Umformung erfolgt in zwei Stufen, wobei die erste Stufe in einem Druckbereich, in dem die Fließgrenze des Werkstoffes des Rohlinges 12 gerade erreicht ist, also im Bereich von etwa 100-800 bar stattfindet, wonach der Rohling 12 weitgehend an der Gravur 13 anliegt. Die Anlage an der Gravur 13 ermöglicht eine weitere Druckerhöhung in einer zweiten Umformstufe. In dieser wird der Druck auf 2000-3000 bar gesteigert, wodurch der umgeformte Karosseriehohlträger sich gänzlich an die Gravur 13 anlegt und damit kalibriert wird.

Nach der Umformung wird der Innenhochdruck entspannt, wonach das Umformwerkzeug 7 geöffnet wird und das fertigumgeformte Bauteil - beispielhaft als Karosseriehohlträger die A-Säule 5 - entnommen wird. Prinzipiell können auch andere aus Warmbandstahl bestehende Bauteile, wie beispielsweise Achsteile, Längsträger des Chassis, Versteifungsrohre für Cabriolets und versteifende Rahmenstrukturteile (B-,C-Säulen) in dieser Weise gefertigt werden.

Um höhere Umformgrade bei der Umformung zu gestatten, kann der Rohling 12 vor dem Innenhochdruckumformen geglüht werden, wodurch die Duktilität erhöht wird. Warmbandstahl zeigt dabei keine Festigkeitseinbußen. Es ist jedoch genauso denkbar, durch Innenhochdruckumformen den Rohling 12 in seiner Kontur der gewünschten Fertigform grob anzunähern, dann den Umformprozeß zu unterbrechen, das aus dem Rohling 12 teilgefertigte Werkstück zu entnehmen und vor der letzten Stufe des Innenhochdruckumformens ohne Gefügeverlust zwischenzuglühen.

## Patentansprüche

1. Verfahren zum Herstellen von profilierten Karosseriehohlträgern, bei dem ein abgemessenes Stück eines längsnahtgeschweißten Stahlrohres als Rohling unter Verwendung eines teilbaren Formgebungswerkzeuges mittels Innenhochdruck in die durch das Formgebungswerkzeug bestimmte Form umgeformt wird,
**dadurch gekennzeichnet,**
daß als Rohling (12) ein aus einem Warmband-Stahlblech von 1,5 bis 2 mm Stärke der Stahlqualität StW24 hergestelltes Stahlrohr verwendet wird.

2. Verfahren nach Anspruch 1,
**dadurch gekennzeichnet,**
daß als Rohling (12) ein Ovalrohr verwendet wird.

3. Verfahren nach Anspruch 1,
**dadurch gekennzeichnet**,
daß die profilierten Karosseriehohlträger (5) in mehreren Stufen umgeformt werden und daß vor dem Innenhochdruckumformen oder vor einer letzten Stufe des Innenhochdruckumformens die teilgefertigten Werkstücke zwischengeglüht werden.

4. Verfahren nach Anspruch 1,
**dadurch gekennzeichnet**,
daß als profilierte Karosseriehohlträger A-Säulen (5) hergestellt werden.

## Claims

1. A process for the manufacture of sectional hollow vehicle body members in which a measured piece of a longitudinal seam welded steel pipe as a blank is formed into the shape determined by the forming tool by means of internal high pressure,
characterised in that
a steel pipe made from a hot strip steel sheet with a thickness of 1.5 to 2 mm of steel quality StW24 is used as the blank (12).

2. A process in accordance with Claim 1,
characterised in that
an oval pipe is used as the blank (12).

3. A process in accordance with Claim 1,
characterised in that
the sectional hollow vehicle body members (5) are formed in several stages and that the partially manufactured work pieces are process-annealed prior to internal high pressure forming or prior to the last stage of internal high pressure forming.

4. A process in accordance with Claim 1,
characterised in that
A-pillars are manufactured as sectional hollow vehicle body members (5).

## Revendications

1. Procédé pour fabriquer des poutres creuses profilées pour carrosseries, dans lequel un tronçon de tube d'acier soudé à joint longitudinal mis à la mesure, utilisé comme ébauche, est formé, avec utilisation d'un outil de formage en plusieurs parties, au moyen d'une haute pression intérieure, à la forme déterminée par l'outil de formage, caractérisé en ce qu'on utilise comme ébauche (12), un tube d'acier fabriqué à partir d'une tôle d'acier laminée à chaud de 1,5 à 2 mm d'épaisseur de la qualité d'acier StW24.

2. Procédé selon la revendication 1, caractérisé en ce qu'on utilise comme ébauche (12) un tube ovale.

3. Procédé selon la revendication 1, caractérisé en ce que les poutres creuses profilées (5) pour carrosseries sont formées en plusieurs étapes et en ce qu'avant le formage par haute pression intérieure, ou avant une dernière étape du formage par haute pression intérieure, les pièces partiellement finies sont soumises à un recuit intermédiaire.

4. Procédé selon la revendication 1, caractérisé en ce qu'en qualité de poutres creuses profilées pour carrosseries, on fabrique des montants A (5).
